# EUROPEAN PATENT SPECIFICATION

(11) **EP 2 061 189 B1**
(45) Date of publication and mention of the grant of the patent: **31.07.2013**
(21) Application number: 07816348.2
(22) Date of filing: 17.09.2007
(51) Int. Cl.: H04L 12/46

(54) **ETHERNET FRAME TRANSMITTING METHOD AND ETHERNET INFRASTRUCTURE**
ETHERNET-RAHMENSENDEVERFAHREN UND ETHERNET-INFRASTRUKTUR
PROCÉDÉ DE TRANSMISSION DE TRAME ETHERNET ET INFRASTRUCTURE ETHERNET ASSOCIÉE

(30) Priority: 15.09.2006 CN 200610127441
(43) Date of publication of application: 20.05.2009
(73) Proprietor: Huawei Technologies Co., Ltd., Longgang District, Shenzhen Guangdong 518129 (CN)
(72) Inventor: FAN, Lingyuan, Shenzhen, Guangdong 518129 (CN); WU, Yongji, Shenzhen, Guangdong 518129 (CN); ZI, Kang, Shenzhen, Guangdong 518129 (CN)
(74) Representative: Körber, Martin Hans
(86) International application number: PCT/CN2007/002731
(87) International publication number: WO 2008/040163

(56) References cited:
- EP-A2- 1 672 850
- WO-A1-2005/078994
- CN-A- 1 635 754
- US-A1- 2006 013 142
- VASILE RADOACA DINESH MOHAN NORTEL NETWORKS ANANTH NAGARAJAN SPRINT JAVIER ACHIRICA TELEFONICA DATA ANDREW MALIS VIVACE NETWORKS Y: "GVPLS/LPE - Generic VPLS Solution based on LPE Framework; draft-radoaca-ppvpn-gvpls-01.txt" IETF STANDARD-WORKING-DRAFT, INTERNET ENGINEERING TASK FORCE, IETF, CH, no. 1, 1 October 2002 (2002-10-01), XP015004932 ISSN: 0000-0004

## Description

### Field of the Technology

The present invention relates to an Ethernet technology, and more particularly to an Ethernet frame transmission method and an Ethernet architecture.

### Background of the Invention

Ethernet technology becomes one of the main technologies for building a Metropolitan Area Network in the future and is widely applied at each level of the broadband metropolitan area network for its conciseness and sound openness, significant cost advantage, wide applicability and recognition.

Meanwhile, the industry has clearly realized that in order to turn the Ethernet technology into a Carrier Ethernet technology, technological breakthroughs and improvements in many aspects are needed. The Metro Ethernet Forum (MEF) made a comprehensive summary on this, and realizes that the Carrier Ethernet needs to solve problems in five aspects, namely, scalability, reliability, hard quality of service (QoS) assurance, time division multiplex (TDM) support, and service management:

Scalability: number of service instances and scalability of converged bandwidth;

Reliability: fast failure recovery protection at a level as high as 50 milliseconds;

Hard QoS assurance: providing hard end-to-end QoS assurance;

TDM support: supporting conventional TDM services and applications; and

Service management: carrier-class service provision and operation administration maintenance (OAM) capability.

Centering on the five major aspects, providers, equipment suppliers, and various standards organizations are actively making researches on the evolution of the Ethernet technology to the Carrier Ethernet. Currently, the technical trends for research mainly include Ethernet over multiple protocol label switching (MPLS) (EoMPLS), provider backbone transport (PBT), and virtual local area network (VLAN) switching (VS), and the like.

First technical solution in the prior art:

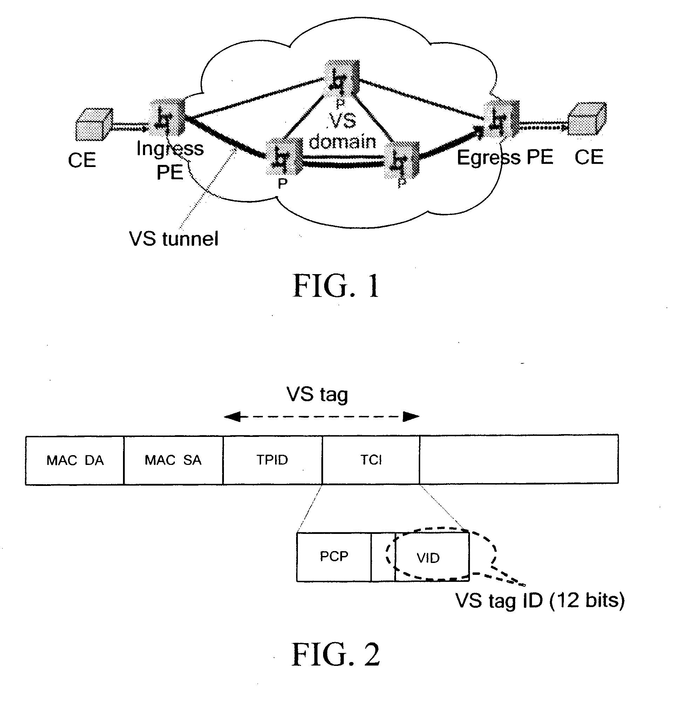

The basic principle of an existing VS technology is as shown in FIG. 1. A tag switching is performed by a VLAN tag in an Ethernet frame to establish a VS tunnel from one provider edge (PE) to another PE in a VS domain. When a customer data packet/frame from a customer edge (CE) enters the VS domain, an ingress PE selects a suitable VS tunnel to transfer the traffic flow. The traffic flow is switched by several intermediate providers (Ps) in the VS tunnel and finally reaches an egress PE. The Egress PE terminates the tunnel, obtains the customer data packet/frame, and forwards the customer data packet/frame to the CE.

When the customer data packet/frame reaches the VS domain from the CE, the ingress PE performs the following processing.

1) First, it is determined to which forwarding equivalence class (FEC) the customer data packet/frame belongs according to a policy. The policy is flexible, and may be based on a MAC address, an IP address (such as a destination IP address and an IPv4 quintuple), an Ingress Port, an Ingress Port + Ingress VLAN ID, etc.

2) The traffic flow is mapped to a VS tunnel according to the FEC to which the traffic flow belongs, and an egress port and an egress VLAN corresponding to the VS tunnel are obtained.

3) The tunnel Ethernet frame is encapsulated and then sent out from the corresponding egress port. The Ethernet frame includes a MAC destination address (MAC-DA), a MAC source address (MAC-SA), a VLAN tag (Egress VLAN), and a payload.

The Ethernet frame is forwarded in the VS domain along the VS tunnel. After the Ethernet frame reaches the P equipment, the P performs the following processing.

1) A VS table is searched according to the ingress port and the ingress VLAN of the Ethernet frame, so as to obtain the egress port and the egress VLAN.

2) The original ingress VLAN in the Ethernet frame is replaced by the egress VLAN, the Ethernet frame is re-encapsulated and then sent out from the corresponding egress port.

When the Ethernet frame reaches the end of the VS tunnel, the egress PE performs the following processing.

1) The VS tunnel is ended and the tunnel Ethernet frame is decapsulated.

2) The customer data packet/frame is restored and forwarded to the corresponding CE equipment. The forwarding method is flexible, for example, forwarding according to the IP address, MAC address, ingress port + ingress VLAN, or other information.

Currently, the VS technology may have two kinds of VS tags for switching.

The first VS tag switching method is to perform the switching by a layer of VLAN tags as a VS tag, as shown in FIG. 2.

The VLAN tag may be a V-TAG (VLAN-TAG) in an Ethernet frame structure defined by the IEEE 802.1q or a service VLAN tag (S-TAG) in a VLAN stack (QinQ) Ethernet frame structure defined by the IEEE 802.1ad. In this method, the length of the VS tag ID is equal to that of a VS tag identifier (VID) in the VLAN tag, and is only 12 bits.

In the above method, since the VID is limited to 12 bits, the number of VS connections carried on each link cannot be larger than 4096 (i.e., 2¹²), and thus the method has a scalability problem and is difficult to be applied in large scale networks.

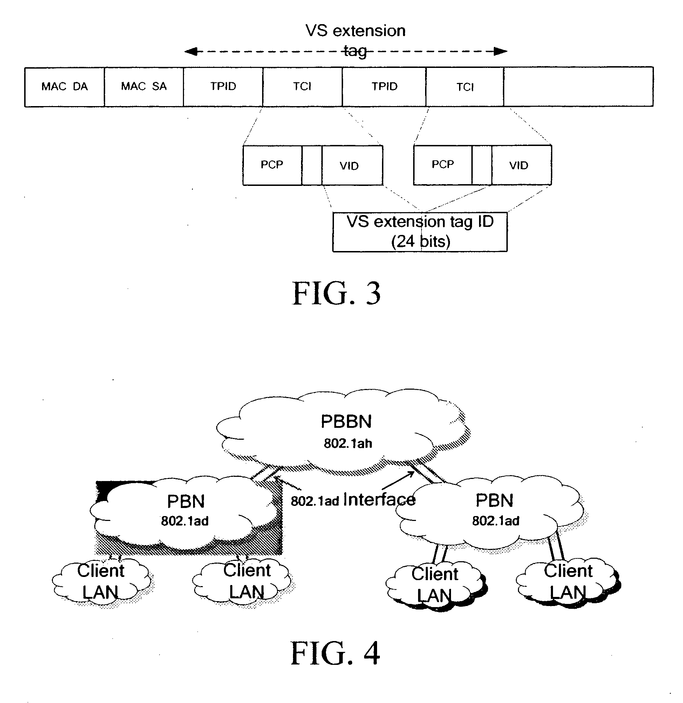

The second VS tag switching method is to perform the switching using a combination of two layers of VLAN tags as a VS extension tag, as shown in FIG. 3.

The two layers of VLAN tags may be the S-TAG and customer VLAN tag (C-TAG) in the QinQ Ethernet frame structure defined by the Institute of Electrical and Electronics Engineers (IEEE) 802.1ad or other combinations. The length of a VS extension tag ID is equal to that of two VIDs and reaches 24 bits. Therefore, the number of VS connections carried on each link may reach 16 M, and thus the VLAN scalability problem is solved. However, in this method, two layers of VLAN tags need to be switched as one VS extension tag in the forwarding process, which is considered as changing the semanteme of a tag protocol identifier (TPID) defined in existing IEEE standards. Being a non-routine practice, the method currently has not been well accepted in the industry. Further, at present, chips with the VLAN switching are not available.

Second technical solution in the prior art:

The provider Ethernet and client Ethernet that are currently under study by the IEEE adopt hierarchical architecture. As shown in FIG. 4, the IEEE 802.1ad defines a provider bridged network (PBN), which is responsible for connecting separate client local area networks (LANs) and providing LAN separation, bridging, virtual bridging, and other functions. The IEEE 802.1ah defines a provider backbone bridged network (PBBN), which is responsible for interconnecting a plurality of PBN, so as to achieve the separation of a customer MAC from a provider MAC. The PBBN can provide up to 2²⁴ service instances, and thus provides a PE architecture with a better scalability.

Here, the first method is to adopt a PBN defined by the IEEE 802.1ad

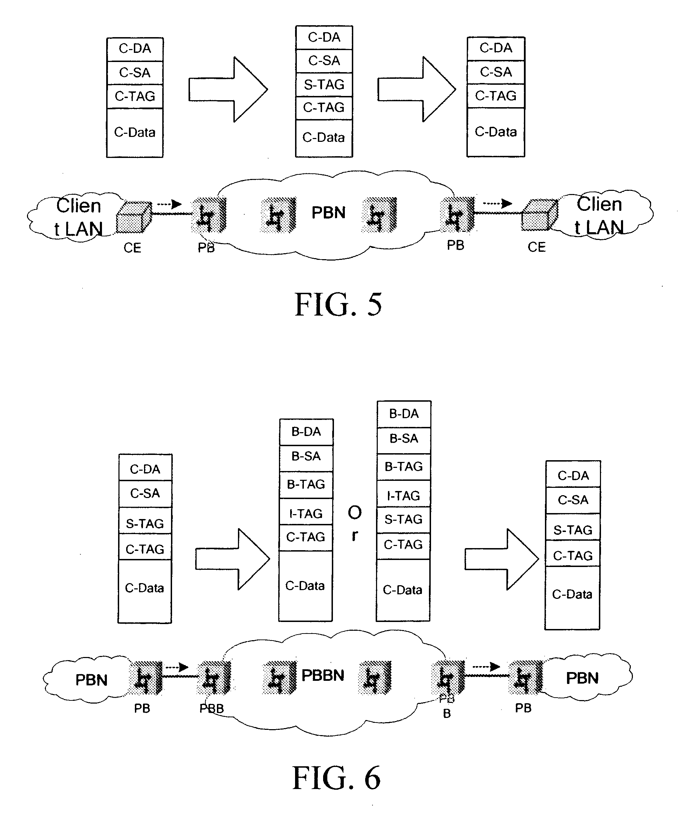

The 802.1ad achieves the VLAN stack (also called QinQ) on the basis of the 802.1Q. As shown in FIG. 5, when an Ethernet frame from a client LAN enters a PBN, an edge provider bridge (PB) tags the Ethernet frame with a provider VLAN tag (for example, an S-TAG) according to an ingress port or customer VLAN TAG (C-TAG). An intermediate PB forwards the Ethernet frame according to a client MAC-DA (C-DA) and the S-TAG.. After the Ethernet frame leaves the PBN and before it enters a peer network, the edge PB strips off the S-TAG to restore the user data frame.

Although'the S-TAG is separated from the C-TAG in the PBN defined by the 802.1ad, the S-TAG is still 12-bit, and thus the provider network is still restricted by the 4K VLAN.

The provider network and the customer network are not perfectly isolated. The provider network still needs to learn the customer MAC addresses and performs forwarding according to them. As a result, uncertainty of the customer network cannot be inhibited in the provider network, resulting in that the behavior of the provider network cannot be predicted, and the provider network oscillates with the customer network.

The second method is to adopt a PBBN defined by the IEEE 802.ah

The 802.1ah is responsible for interconnecting a plurality of PBN, and achieves MAC-in-MAC. As shown in FIG. 6, when a data frame from a PBN enters the PBBN, an edge provider backbone bridge (PBB) tags the data frame with a layer of provider Ethernet frame headers, including a backbone destination address (B-DA), a backbone network source address (B-SA), a backbone VLAN tag (B-TAG), and a service instance TAG (I-TAG). An intermediate PBB node of the PBBN performs forwarding according to the B-DA and the B-TAG in the provider Ethernet frame headers. After the Ethernet frame leaves the PBBN and before it enters a peer PBN, the edge PBB node strips off the provider Ethernet frame headers to restore the user data frame.

The B-DA and B-SA are respectively B-MAC addresses of a destination PBB and a source PBB in the PBBN network. The B-TAG is equivalent to the S-TAG in the 802.1ad network, and is adapted for identifying a tunnel in the backbone network. The I-TAG contains a service instance ID (I-SID) field for identifying a service instance. The I-TAG is transparent to the intermediate PBB node, that is, the intermediate PBB node does not process the 1-TAG. In addition, it can be seen from FIG. 6 that, the S-TAG is optional in frame encapsulation of the 802.1 ah, depending upon the interface mode between the edge PBB and the PB. For a transparent interface mode and a one-to-many S-tagged interface mode, the S-TAG needs to be encapsulated. For a one-to-one S-tagged interface mode, the S-TAG does not need to be encapsulated, since the 1-TAG has completed the mapping of S-TAG to each S-tagged interface.

Although the PBBN defined by the 802.1ah performs forwarding based on B-DA and B-TAG, the automatic forwarding table creation mode is still adopted and an aging mechanism is reserved. As a result, the forwarding table is large in size, and as the network scale increases, the network behavior becomes less predictable.

The B-TAG is still 12-bit, so that tunnels in a provider backbone network are still restricted by the 4K VLAN.

Further prior art solutions are disclosed in documents: EP 1 713 197; and US 2006/0013142.

### SUMMARY OF THE INVENTION

Accordingly, an embodiment of the present invention provides an Ethernet frame transmission method and an Ethernet architecture, so as to solve the scalability problem in the existing VS technology.

An Ethernet frame transmission method is provided as defined in independent claim 1.

An Ethernet frame transmission method is further provided as defined in independent claim 7.

An Ethernet architecture system is provided as defined in independent claim 9.

An Ethernet architecture system is further provided as defined in independent claim 11.

In embodiments of the present invention, the first level VS tunnel (or the first level MAC switching tunnel) and the second level VS tunnel are established, and multiplexing and demultiplexing between the two levels of tunnels are achieved, so that the scalability of the VS technology is greatly improved.

### BRIEF DESCRIPTION OF THE DRAWINGS

FIG. 1 is a schematic view illustrating principles of VS switching in the prior art;

FIG. 2 is a schematic structural view of a data frame in which a layer of VLAN tags are used as a VS tag in the prior art;

FIG. 3 is a schematic structural view of a data frame in which two layers of VLAN tags are used as a VS tag in the prior art;

FIG. 4 is a schematic view of a connection of provider backbone bridged networks (PBBNs) defined by the IEEE 802.1ah in the prior art;

FIG. 5 is a flow chart of a data frame transmission process in a provider bridged network (PBN) defined by the IEEE 802.1 ad in the prior art;

FIG. 6 is a flow chart of a data frame transmission process in a PBBN defined by the IEEE 802.1ah in the prior art;

FIG. 7 is a flow chart of a data frame transmission process in which two levels of VS tunnels are applied in PBN defined by the IEEE 802.1 and and a PBBN defined by the IEEE 802.1 ah according to a first embodiment of the present invention;

FIG. 8 is a schematic view of a first level VS tunnel bearing a plurality of second level VS tunnels at the same time according to an embodiment of the present invention; and

FIG. 9 is a flow chart of a data frame transmission process in which two levels of a VS tunnel and a MAC tunnel are applied in PBN defined by the IEEE 802.1ad and a PBBN defined by the IEEE 802.1ah according to a second embodiment of the present invention.

### DETAILED DESCRIPTION OF THE EMBODIMENTS

In a first embodiment, two levels of VS tunnels are used to transmit an Ethernet frame. This embodiment includes the following steps.

A first level VS tunnel and a second level VS tunnel are established.

An Ethernet frame sent from a transmitter is mapped to a second level Virtual Local Area Network (VLAN) Switching (VS) tunnel.

An ingress edge node of the first level VS tunnel multiplexes the second level VS tunnel into the first level VS tunnel, and the second level VS tunnel is identified by a unique VC tag.

An intermediate node of the first level VS tunnel forwards the Ethernet frame in the first level VS tunnel by adopting a VS technology, and transparently transmits Ethernet frame of the second level VS tunnel and the VC tag carried by the first level VS tunnel.

An egress edge node of the first level VS tunnel demultiplexes the first level VS tunnel into the corresponding second level VS tunnel according to the VC tag to transmit the Ethernet frame sent from the transmitter to a receiver.

In the above method of the present invention, one first level VS tunnel can bear a plurality of second level VS tunnels at the same time.

When the ingress edge node of the first level VS tunnel multiplexes a plurality of second level VS tunnels into the same first level VS tunnel, different VC tags are allocated to different second level VS tunnels.

In the present invention, the first level VS tunnel and the second level VS tunnel may be already established in advance, or dynamically established when data transmission is needed.

The method of the present invention is described in detail below through an example, in which second level VS tunnels and a first level VS tunnel are respectively established in PBN and a PBBN according to the provider Ethernet hierarchical architectures defined by the IEEE 802.1ad and 802.1ah.

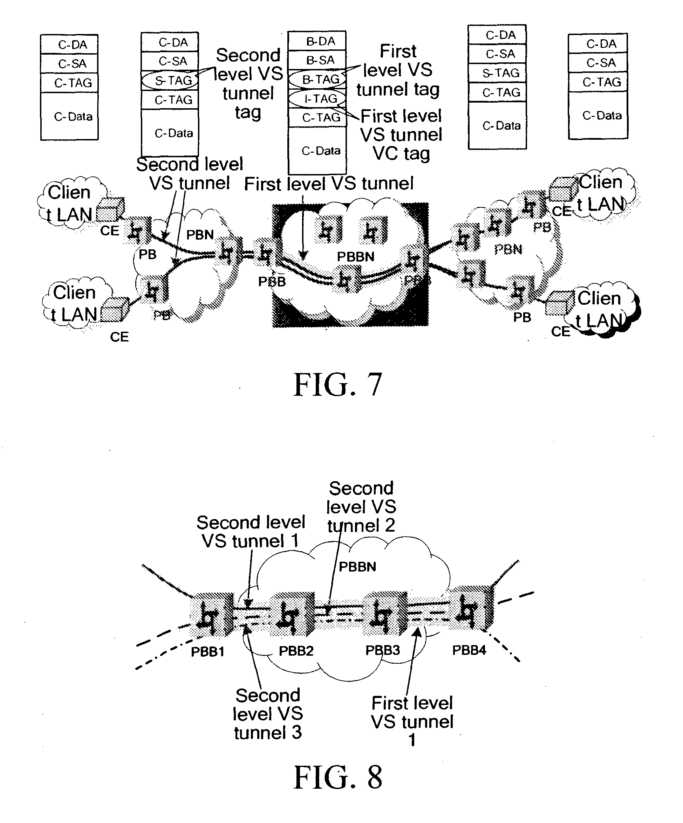

Referring to FIG. 7, two levels of VS tunnels are established for a user traffic flow.

The second level VS tunnel starts from an edge PB for connecting a CE in a PBN, extends across the transmitter PBN, a PBBN, and a receiver PBN, and terminates at an edge PB node for connecting a CE in the receiver PBN. The second level VS tunnel uses an S-TAG in an IEEE 802.1 and frame structure as a VS tag for switching. An intermediate PB node of the PBN only needs to support VS, and does not need to learn a customer MAC (C-MAC) address since no forwarding needs to be performed according to the C-MAC.

The first level VS tunnel starts from an edge PBB, extends across the PBBN, and terminates at another edge PBB node. The first level VS tunnel uses a B-TAG in the IEEE 802.1ah frame structure as a VS tag for switching. An intermediate PBB node of the PBBN only needs to support VS, and does not need to perform forwarding according to a B-MAC and a B-VLAN.

A client-server mode is adopted between the two levels of tunnels. The first level VS tunnel in the PBBN is adapted to bear the second level VS tunnel in the PBN. That is, the first level VS tunnel provides a bearer service to the second level VS tunnel. One first level VS tunnel can bear more than one second level VS tunnel at the same time. Multiplexing and demultiplexing between the two levels of VS tunnels need to be completed at two ends of the first level VS tunnel. In particular, an ingress edge PBB node of the first level VS tunnel multiplexes the second level VS tunnel into the first level VS tunnel, an egress edge PBB node of the first level VS tunnel demultiplexes the first level VS tunnel into the second level VS tunnel. An intermediate PBB node of the first level VS tunnel only needs to forward the first level VS tunnel and transparently transmit the second level VS tunnel. The ingress edge PBB node and egress edge PBB node are directed to a one-way VS tunnel. A two-way VS tunnel can be simply considered as a combination of two one-way tunnels in opposite directions. In this case, a PBB node is not only an ingress PBB node in one direction, but also an egress PBB node in the other direction, and needs to have multiplexing and demultiplexing capabilities at the same time.

In order to achieve the multiplexing and demultiplexing between the two levels of VS tunnels, in the embodiment of the present invention, an I-SID in an I-TAG in an IEEE 802.1 ah frame structure is used as a VC tag of the first level VS tunnel for identifying different second level VS tunnels carried by the first level VS tunnel. When the ingress edge PBB node maps the second level VS tunnels into the same first level VS tunnel, different VC tags are allocated to different second level VS tunnels. The egress edge PBB node demultiplexes the first level VS tunnel into different second level VS tunnels according to the different VC tags. The intermediate PBBN node of the first level VS tunnel transparently transmits the second level VS tunnels and does not need to process the VC tags.

The VC tags may be allocated with three methods.

In a first method, the VC tags are allocated based on each first level VS tunnel.

That is, each first level VS tunnel separately allocates VC tags. In this case, each first level VS tunnel can bear up to 2²⁴ (assuming that the I-SID is 24-bit) second level VS tunnels.

In a second method, the VC tags are allocated based on each edge PBB node

That is, each edge PBB node separately allocates VC tags. In this case, all first level VS tunnels that terminate at the edge PBB node can totally bear up to 2²⁴ second level VS tunnels.

In a third method, the VC tags are allocated based on an entire PBBN domain.

That is, VC tags are allocated in the entire PBBN domain. In this case, each first level VS tunnel within the PBBN can totally bear up to 2²⁴ second level VS tunnels.

In order to achieve the multiplexing and demultiplexing between the two levels of VS tunnels, a two-level VS tunnel multiplexing relationship needs to be established at an ingress edge PBB node of the PBBN, and the key information is as follows:

Ingress Port, S-TAG —> Egress Port, [B-DA, B-SA], B-TAG, I-SID. The Ingress Port and S-TAG are respectively configured as an ingress port and an S-TAG for connecting the PBB to the second level VS tunnel. The Egress Port and B-TAG are respectively configured as an egress port and a B-TAG corresponding to the first level VS tunnel bearing the second level VS tunnel; The I-SID is configured as a VC tag for identifying the second level VS tunnel.

"Ingress Port + S-TAG" is a keyword index of the multiplexing relationship, according to which a specific multiplexing relationship can be retrieved.

The B-DA and B-SA are respectively a destination B-MAC and a source B-MAC of a provider Ethernet frame header on an external layer of the 802.1 ah, and are optional parameters. For the VS technology, the intermediate node of the VS tunnel only needs to perform forwarding according to a port and a VLAN tag, and does not need to examine or learn a MAC address. Thus, when the forwarding is performed by using VS in the PBBN, the two parameters do not have practical meanings. However, in order to conform to the 802.1ah architecture, the B-DA and B-SA are respectively configured as a B-MAC addresses of the edge PBB nodes on two sides of the first level VS tunnel

In addition, a two-level VS tunnel demultiplexing relationship needs to be established at the egress edge PBB node of the PBBN, and the key information is as follows:

[Ingress Port, B-TAG], I-SID —> Egress Port, S-TAG.. The Ingress Port and B-TAG are respectively configured as an ingress port and a B-TAG corresponding to the first level VS tunnel; The I-SID is configured as a VC tag for identifying the second level VS tunnel. The Egress Port and S-TAG are respectively configured as an egress port and an S-TAG corresponding to the second level VS tunnel at the egress edge PBB.

"[Ingress Port+B-TAG +] I-SID" is a keyword index of the demultiplexing relationship, according to which a specific demultiplexing relationship can be retrieved.

The Ingress Port and B-TAG are optional parameters in the demultiplexing relationship, and dependent upon the method adopted to allocate VC tags to the first level VS tunnels. If the VC tags are allocated based on each first level VS tunnel, the Ingress Port, B-TAG, and I-SID need to be combined together in order to determine a second level VS tunnel. Thus in this case, the demultiplexing relationship needs the Ingress Port and B-TAG parameters. If the VC tags of the first level VS tunnels are allocated based on each edge PBB node or based on an entire PBBN domain, the I-SID parameter is sufficient for determining a second level VS tunnel. Thus, in this case, the demultiplexing relationship does not need the Ingress Port and B-TAG parameters.

The above two-level VS tunnel multiplexing and demultiplexing relationships may be established through a static configuration, established dynamically through signaling, or established by using various implementation methods in the prior art, which are not limited in the present invention.

In the above description, an implementation of the multiplexing and demultiplexing relationships is provided by way of example only, and other implementations may also be flexibly adopted in practice.

A complete traffic flow transmission process is described as follows.

Block1. A transmitter sends an Ethernet frame carrying C-DA, C-SA, C-TAG, and C-Data to an edge PB node of the transmitter PBN through a CE of a client LAN.

Block 2. After receiving a traffic flow, the edge PB of the transmitter PBN maps user data to a second level VS tunnel according to information such as Ingress Port, C-DA, C-SA, and C-TAG, encapsulates the user data with a corresponding S-TAG into a QinQ Ethernet frame, and sends the QinQ Ethernet frame from a corresponding Egress Port.

Block 3. When the traffic flow passes through an intermediate PB node of the transmitter PBN, the intermediate PB node performs one-layer VS tag switching according to an Ingress Port and an external S-TAG, that is, looks up a VLAN switching table according to the Ingress Port and S-TAG of the Ethernet frame to obtain an Egress Port and a new S-TAG, replaces the original S-TAG with the new S-TAG, and sends the new S-TAG from a corresponding Egress Port.

Block 4. When the traffic flow arrives at an ingress edge PBB node of a PBBN, the node looks up a two-level VS tunnel multiplexing relationship according to "Ingress Port + S-TAG" to obtain the first level VS tunnel tag B-TAG and VC tag, encapsulating the corresponding B-DA, B-SA, B-TAG, and I-TAG (in which the I-SID is the obtained VC tag) into a MAC-in-MAC Ethernet frame, and sends the Ethernet frame from a corresponding Egress Port.

Block 5. When the traffic flow passes through an intermediate PBB node of the PBBN, the intermediate PBB node performs one-layer VS tag switching according to an Ingress Port and an external B-TAG, that is, looks up a VLAN switching table according to the Ingress Port and S-TAG of the Ethernet frame to obtain an Egress Port and a new B-TAG, replaces the original B-TAG with the new B-TAG, and sends the new B-TAG from a corresponding Egress Port.

Block 6. When the traffic flow arrives at an egress edge PBB node of the PBBN, the egress edge PBB node strips off a provider Ethernet frame header (containing the B-DA, B-SA, B-TAG, and I-TAG), and looks up a two-level VS tunnel demultiplexing relationship according to "[Ingress Port + B-TAG +] I-SID" to obtain a second level VS tunnel tag S-TAG, encapsulates with the corresponding S-TAG into a QinQ Ethernet frame, and sends the Ethernet frame from a corresponding Egress Port.

Block 7. When the traffic flow passes through a receiver PBN, an intermediate PB node of the receiver PBN performs one-layer VS tag switching according to an Ingress Port and an external S-TAG, that is, looks up a VLAN switching table according to the Ingress Port and S-TAG of the Ethernet frame to obtain an Egress Port and a new S-TAG, replaces the original S-TAG with the new S-TAG, and sends the new S-TAG from a corresponding Egress Port.

Block 8. When the traffic flow arrives at an egress PB node of the receiver PBN, the egress PB node strips off the S-TAG, terminates the second level VS tunnel, and forwards the data frame to a CE.

The above described is a complete general process. In different application scenarios, the process may be simplified, for example, as follows.

When a receiver is directly connected to a PB node, the PB node terminates the second level VS tunnel and directly forwards the data frame to the connected receiver.

When the receiver is directly connected to a PBB node, the PBB node demultiplexes the first level VS tunnel into the second level VS tunnel, terminates the second level VS tunnel, and directly forwards the data frame to the connected receiver.

In the present invention, several first level VS tunnels and second level VS tunnels can be established. One first level VS tunnel can bear a plurality of second level VS tunnels at the same time. As shown in FIG. 8, a first level VS tunnel 1 from PBB1 to PBB4 in a PBBN bears three second level VS tunnels at the same time.

A second level VS tunnel 1: the access point at the PBB1 is Port1, S-TAG=20; the access point at the PBB4 is Port2, S-TAG=20; the corresponding VC tag is 100.

A second level VS tunnel 2: the access point at the PBB1 is Port2, S-TAG=20; the access point at the PBB4 is Port2, S-TAG=30; the corresponding VC tag is 200.

A second level VS tunnel 3: the access point at the PBB1 is Port2, S-TAG=30; the access point at the PBB4 is Port3, S-TAG=50; the corresponding VC tag is 300.

Three second level VS tunnels carried by the first level VS tunnel 1 are identified by different VC tags, respectively 100, 200, and 300.

The same second level VS tunnel may use the same S-TAG for connecting to two ends of the first level VS tunnel (for example, the second level VS tunnel 1 uses the same S-TAG, which is 20, at the PBB1 and PBB4). As such, address spaces of the S-TAGs at the sending and receivers may overlap, thus achieving a good scalability.

In a second embodiment, two levels of tunnels are used to transmit an Ethernet frame, in which a first level tunnel is forwarded by adopting a MAC in MAC technology, and a second level tunnel is forwarded by adopting a VS technology. This embodiment includes the following steps.

A first level MAC switching tunnel and a second level VS tunnel are established.

An Ethernet frame sent from a transmitter is mapped to a second level VS tunnel.

An ingress edge node of the first level MAC switching tunnel connected to the second level VS tunnel multiplexes the second level VS tunnel into the first level MAC switching tunnel, and the second level VS tunnel is identified by a unique VC tag.

An intermediate node of the first level MAC switching tunnel forwards the Ethernet frame of the first level MAC switching tunnel by adopting a MAC in MAC technology (the intermediate node of the first level tunnel statically configures a MAC forwarding table, and the intermediate node forwards the first level tunnel according to a B-DA and a B-TAG), and transparently transmits the second level VS tunnel and the VC tag carried by the first level VS tunnel.

An egress edge node of the first level MAC switching tunnel demultiplexes the first level MAC switching tunnel into a corresponding second level VS tunnel according to the VC tag to transmit the Ethernet frame to a receiver.

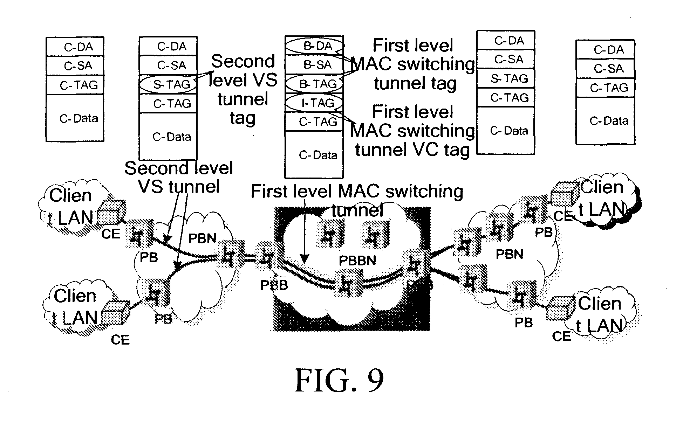

FIG 9 is a flow chart of a data frame forwarding process according to the second embodiment. This process is similar to the forwarding process of the first embodiment shown in FIG 7 (so the detailed description is omitted), and the difference lies in that the first level tunnel is not forwarded by adopting a VS technology, but by adopting a MAC in MAC technology instead.

In order to achieve the multiplexing and demultiplexing between the two levels of tunnels, a two-level tunnel multiplexing relationship needs to be established at an ingress edge PBB node of the PBBN. For example, the two-level tunnel multiplexing relationship may be constituted by the following two tables:

Table 1, including a field: Ingress Port, S-TAG -> first level MAC switching tunnel ID, I-SID; and

Table 2, including a field: first level MAC switching tunnel ID -> Egress Port, B-DA, B-SA, B-TAG.

The first level MAC switching tunnel ID is an internal ID allocated by the PBB node to the first level MAC switching tunnel. According to the first level MAC switching tunnel ID, detailed encapsulation information of the tunnel can be found in Table 2.

In addition, a two-level tunnel demultiplexing relationship needs to be established at the egress edge PBB node of the PBBN, and the key information is as follows:

[Ingress Port, B-TAG], I-SID -> Egress Port, S-TAG. The Ingress Port and B-TAG are configured as an ingress port and a B-TAG corresponding to the first level MAC switching tunnel. The I-SID is configured as a VC tag for identifying the second level VS tunnel. The Egress Port and S-TAG are configured as an egress port and an S-TAG corresponding to the second level VS tunnel at the egress edge PBB.

"[Ingress Port+B-TAG +] I-SID" is a keyword index of the demultiplexing relationship, according to which a specific demultiplexing relationship can be retrieved.

The Ingress Port and B-TAG are optional parameters in the demultiplexing relationship, depending upon the method adopted to allocate VC tags to the first level MAC switching tunnels. If the VC tags are allocated based on each first level MAC switching tunnel, the Ingress Port, B-TAG, and I-SID need to be combined together in order to determine a second level VS tunnel. Thus, in this case, the demultiplexing relationship needs the Ingress Port and B-TAG parameters. If the VC tags of the first level MAC switching tunnels are allocated based on each edge PBB node or based on an entire PBBN domain, the I-SID parameter is sufficient for determining a second level VS tunnel. Thus, in this case, the demultiplexing relationship does not need the Ingress Port and B-TAG parameters.

The above two-level tunnel multiplexing and demultiplexing relationships may be established through a static configuration, established dynamically through signaling, or established by using various implementation methods in the prior art, which are not limited in the present invention.

In the above description, an implementation of the multiplexing and demultiplexing relationships is provided by way of example only, and other implementations may also be flexibly adopted in practice.

According to the method provided in the first embodiment, the present invention provides a corresponding Ethernet architecture. In the Ethernet architecture, the provider Ethernet hierarchical structures defined by the IEEE 802.1ad and 802.1ah are adopted, and a second level VS tunnel and a first level VS tunnel are respectively established in PBN and a PBBN. An Ethernet frame is transmitted through the multiplexing and demultiplexing between the two levels of VS tunnels.

FIG. 7 is a schematic view of the specific connection and structure of the Ethernet architecture. The operating principles are described as follows.

An Ethernet frame sent from a transmitter is mapped into a second level VS tunnel.

An ingress edge node of a first level VS tunnel connected to the second level VS tunnel multiplexes the second level VS tunnel into the first level VS tunnel.

An intermediate node of the first level VS tunnel forwards the first level VS tunnel by adopting a VS technology, and transparently transmits the second level VS tunnel carried by the first level VS tunnel.

An egress edge node of the first level VS tunnel demultiplexes the first level VS tunnel into a corresponding second level VS tunnel to transmit the Ethernet frame sent from the transmitter to a receiver.

In the Ethernet architecture of the present invention, the ingress edge PBB node of the first level VS tunnel includes a first multiplexing module adapted to multiplex the second level VS tunnel into the first level VS tunnel.

The egress edge PBB node of the first level VS tunnel includes a first demultiplexing module adapted to demultiplex the first level VS tunnel into a corresponding second level VS tunnel.

The ingress edge PBB node and the egress edge PBB node of the first level VS tunnel are determined according to the direction of a traffic flow. One edge PBB node may be an ingress node of one or more first level VS tunnels, and meanwhile, may be an egress node of one or more first level VS tunnel. An edge PBB node serving as an ingress node and an egress node at the same time includes both the first multiplexing module and the first demultiplexing module.

The first multiplexing module stores a two-level VS tunnel multiplexing relationship.

When a traffic flow arrives at the ingress edge PBB node, the first multiplexing module in the ingress edge PBB node matches the two-level VS tunnel multiplexing relationship according to an ingress port for receiving the second level VS tunnel and an S-TAG to obtain a corresponding first level VS tunnel tag B-TAG and I-SID; encapsulates a B-DA, a B-SA, the B-TAG, and the I-SID into a provider Ethernet frame header; and sends the provider Ethernet frame header through a corresponding egress port.

The first demultiplexing module stores a two-level VS tunnel demultiplexing relationship.

When a traffic flow arrives at the egress edge PBB node, the first demultiplexing module in the egress edge PBB node strips off a B-DA, a B-SA, a B-TAG, and an I-SID that are encapsulated in an Ethernet frame header; matches the two-level VS tunnel demultiplexing relationship according to the I-SID to obtain a corresponding second level VS tunnel; encapsulates an S-TAG of the second level VS tunnel into an Ethernet frame header; and sends the Ethernet frame header from a corresponding egress port.

According to the method provided in the second embodiment, the present invention further provides a corresponding Ethernet architecture. In the Ethernet architecture, the provider Ethernet hierarchical structures defined by the IEEE 802.1ad and 802.1ah are adopted, and a second level VS tunnel and a first level MAC switching tunnel are respectively established in PBN and a PBBN. An Ethernet frame is transmitted through the multiplexing and demultiplexing between the two levels of tunnels.

FIG. 9 is a schematic view of the specific connection and structure of the Ethernet architecture. The operating principles are described as follows.

An Ethernet frame sent from a transmitter is mapped into a second level VS tunnel.

An ingress edge node of a first level MAC switching tunnel connected to the second level VS tunnel multiplexes the second level VS tunnel into the first level MAC switching tunnel.

An intermediate node of the first level MAC switching tunnel forwards the first level MAC switching tunnel by adopting a MAC in MAC technology, and transparently transmits the second level VS tunnel carried by the first level MAC switching tunnel.

An egress edge node of the first level MAC switching tunnel demultiplexes the first level MAC switching tunnel into a corresponding second level VS tunnel to transmit the Ethernet frame sent from the transmitter to a receiver.

The ingress edge PBB node of the first level MAC switching tunnel includes a second multiplexing module adapted to multiplex the second level VS tunnel into the first level MAC switching tunnel.

The egress edge PBB node of the first level MAC switching tunnel includes a second demultiplexing module adapted to demultiplex the first level MAC switching tunnel into a corresponding second level VS tunnel. The details are as follows.

The second multiplexing module stores a two-level tunnel multiplexing relationship.

When a traffic flow arrives at the ingress edge PBB node, the second multiplexing module in the ingress edge PBB node matches the two-level tunnel multiplexing relationship according to an ingress port for receiving the second level VS tunnel and an S-TAG to obtain the corresponding first level MAC switching tunnel tag B-TAG, an I-SID, a B-DA, and a B-SA; encapsulates them into a provider Ethernet frame header; and sends the provider Ethernet frame header from a corresponding egress port.

The second demultiplexing module stores a two-level tunnel demultiplexing relationship.

When a traffic flow arrives at an egress edge PBB node, the second demultiplexing module in the egress edge PBB node strips off a provider Ethernet frame header containing a B-DA, a B-SA, a B-TAG, and an I-SID; matches the two-level tunnel demultiplexing relationship according to the I-SID to obtain a corresponding second level VS tunnel; encapsulates an S-TAG of the second level VS tunnel into an Ethernet frame header; and sends the Ethernet frame header from a corresponding egress port.

To sum up, in the present invention, the first level VS tunnel (or the first level MAC switching tunnel) and the second level VS tunnel are established, and multiplexing and demultiplexing between the two levels of tunnels is achieved. As such, the number of VS connections in the PBBN can reach 4096 (the maximum value of the first level VS tunnels or MAC switching tunnels carried on each link) *2²⁴ (each first level VS tunnel can bear up to 2²⁴ second level VS tunnels). Therefore, the scalability of the VS technology is greatly improved.

In the present invention, the S-TAG is used in the PBN for tag switching, and the B-TAG is used in the PBBN for tag switching, so that 4K limitation on the S-TAG and B-TAG is scaled down to single links from the entire network, which somewhat solves the scalability problem of the S-TAG and B-TAG

In the present invention, the PBN no longer performs forwarding according to a customer MAC address. thus preventing the PBN from oscillating with the customer network, so that the behavior of the provider network is predictable.

In the present invention, the unpredictability of the PBBN due to MAC learning, aging and other mechanisms is prevented, and the PBN becomes more stable.

## Claims

1. An Ethernet frame transmission method, comprising:
mapping one or more Ethernet frames sent from a transmitter to a second level Virtual Local Area Network, VLAN, Switching, VS, tunnel corresponding to the transmitter;
multiplexing the second level VS tunnel into a first level VS tunnel by an ingress edge node of the first level VS tunnel which is connected to the second level VS tunnel, the second level VS tunnel identified by a unique Virtual Channel, VC, tag;
switching, by an intermediate node of the first level VS tunnel, said Ethernet frames of the first level VS tunnel by adopting a VS technology, and transparently transmitting said Ethernet frame of the second level VS tunnel and the VC tag carried by the first level VS tunnel; and
demultiplexing, by an egress edge node of the first level VS tunnel, the first level VS tunnel into the second level VS tunnel according to the VC tag, and transmitting said Ethernet frames sent from the transmitter to a receiver by using the second level VS tunnel
wherein the second level VS tunnel is derived from an edge provider bridge, PB, node for connecting a customer edge, CE, in a transmitter PBN and ended at an PB node for connecting a customer edge, CE, in the receiver PBN; the first level VS tunnel is derived from an edge provider backbone bridge, PBB, of a provider backbone bridged network, PBBN, and ended at another edge PBB node,
wherein the multiplexing the second level VS tunnel into the first level VS tunnel by the ingress edge node further comprises:
establishing a two-level VS tunnel multiplexing relationship at an ingress edge PBB node of the PBBN; and
when a traffic flow arrives at the ingress edge PBB node of the PBBN, matching, by the ingress edge PBB node, the two-level VS tunnel multiplexing relationship according to an ingress port for receiving the second level VS tunnel and a service VLAN tags S-TAG, obtaining the corresponding first level VS tunnel tag a backbone VLAN tag, B-TAG, and a service instance ID, I-SID; encapsulating a backbone destination address, B-DA, a backbone source address, B-SA, the B-TAG, and the I-SID into a provider Ethernet frame header; and sending the provider Ethernet frame header from a corresponding egress port.

2. The method according to claim 1, wherein one first level VS tunnel is capable of bearing at least one second level VS tunnel; the second level VS tunnel and the first level VS tunnel are respectively established in provider bridged networks, PBN, and the PBBN defined by IEEE 802.1ad and IEEE 802.1 ah; and the first level VS tunnel uses a service instance ID, I-SID, in a service instance tag, I-TAG, in the IEEE 802.1 ah frame structure as the VC tag.

3. The method according to claim 1, wherein an intermediate PB node of the second level VS tunnel performs one-layer VS tag switching according to an ingress port identity, ID, of the second level VS tunnel and a service VLAN tag, S-TAG, in an IEEE 802.1ad frame structure to transmit said Ethernet frames; and
the first level VS tunnel uses a backbone VLAN tag, B-TAG, in the IEEE 802.1ah frame structure as a VS tag for switching to transmit said Ethernet frames.

4. The method according to claim 1, wherein the B-DA is a backbone MAC, B-MAC, address of an egress edge PBB node of the first level VS tunnel; and
the B-SA is a B-MAC address of the ingress edge PBB node of the first level VS tunnel.

5. The method according to claim 4, wherein the demultiplexing the first level VS tunnel into the second level VS tunnel further comprises:
establishing a two-level VS tunnel demultiplexing relationship at an egress edge PBB node of the PBBN; and
when the traffic flow arrives at the egress edge PBB node of the PBBN, stripping, by the egress edge PBB node, the provider Ethernet frame header containing the B-DA, the B-SA, the B-TAG, and the I-TAG; matching the two-level VS tunnel demultiplexing relationship according to the I-SID in the I-TAG to obtain a corresponding second level VS tunnel tag S-TAG and an egress port; encapsulating the S-TAG into an Ethernet frame header, and sending the Ethernet frame header from the corresponding egress port.

6. The method according to claim 1, wherein an address space of the VC tag is allocated based on each first level VS tunnel independently;
the VC tag is allocated based on each edge PBB node independently; or
the VC tag is allocated based on an entire PBBN domain uniformly.

7. An Ethernet frame transmission method, comprising:
mapping one or more Ethernet frames sent from a transmitter to a second level Virtual Local Area Network, VLAN, Switching, VS, tunnel corresponding to the transmitter;
multiplexing the second level VS tunnel into a first level MAC switching tunnel by an ingress edge node of the first level MAC switching tunnel connected to the second level VS tunnel, the second level VS tunnel identified by a unique virtual channel, VC, tag;
switching, by an intermediate node of the first level MAC switching tunnel, said Ethernet frames of the first level MAC switching tunnel by adopting a MAC in MAC technology, and transparently transmitting said Ethernet frame of the second level VS tunnel and the VC tag carried by the first level MAC switching tunnel; and
demultiplexing, by an egress edge node of the first level MAC switching tunnel, the first level MAC switching tunnel into a corresponding second level VS tunnel according to the VC tag, and transmitting said Ethernet frames sent from the transmitter to a receiver
wherein the second level VS tunnel is derived from an edge provider bridge, PB, node for connecting a customer edge, CE, in a transmitter PBN and ended at an PB node for connecting a customer edge, CE, in the receiver PBN; the first level MAC switching tunnel is derived from an edge provider backbone bridge, PBB, of a provider backbone bridged network, PBBN, and ended at another edge PBB node,
wherein the multiplexing the second level VS tunnel into the first level MAC switching tunnel further comprises:
establishing a two-level tunnel multiplexing relationship at an ingress edge PBB node of the PBBN;
when a traffic flow arrives at the ingress edge PBB node of the PBBN, matching, by the ingress edge PBB node, the two-level tunnel multiplexing relationship according to an ingress port for receiving the second level VS tunnel and a service VLAN tag, S-TAG to obtain corresponding first level MAC switching tunnel encapsulation information comprising a backbone destination addess, B-DA, a backbone source address, B-SA, a backbone VLAN tag, B-TAG, and a service instance ID, I-SID; and encapsulating the encapsulation information into a provider Ethernet frame header; and sending the provider Ethernet frame header from a corresponding egress port.

8. The method according to claim 7, wherein the second level VS tunnel and the first level MAC switching tunnel are respectively established in provider bridged networks PBN, and a provider backbone bridged network, PBBN, defined by IEEE 802.1ad and IEEE 802.1ah; an intermediate PB node of the second level VS tunnel performs one-layer VS tag switching according to an ingress port identity, ID, of the second level VS tunnel and a service VLAN tag, S-TAG, in an IEEE 802.1ad frame structure to transmit said Ethernet frames; and an intermediate node of the first level MAC switching tunnel forwards said Ethernet frames according to a backbone MAC destination address, B-DA and a backbone VLAN tag, B-TAG, according to a MAC forwarding table configured statically.

9. An Ethernet architecture system, wherein a second level virtual local area network, VLAN, switching, VS, tunnel is established in provider bridged networks, PBN and a first level VS tunnel is established in a provider backbone bridged network, PBBN;
the second level VS tunnel is derived from an edge provider bridge, PB node for connecting a customer edge, CE, in a transmitter PBN and ended at an PB node for connecting a customer edge, CE, in the receiver PBN; the first level VS tunnel is derived from an edge provider backbone bridge, PBB, of a provider backbone bridged network, PBBN), and ended at another edge PBB node;
an ingress edge PB node of the second level VS tunnel adapted to receive one or more Ethernet frames sent from a transmitter, map said Ethernet frames into the second level VS tunnel, and transmit said Ethernet frames to an ingress edge PBB node of the first level VS tunnel;
the ingress edge PBB node of the first level VS tunnel adapted to multipl the second level VS tunnel into the first level VS tunnel, and the second level VS tunnel is identified by a unique virtual channel, VC, tag;
an intermediate PBB node of the first level VS tunnel adapted to switch said Ethernet frames of the first level VS tunnel by adopting a VS technology, and transparently transmit said Ethernet frame of the second level VS tunnel and the VC tag carried by the first level VS tunnel; and
an egress edge node of the first level VS tunnel adapted to demultiplex the first level VS tunnel into a corresponding second level VS tunnel according to the VC tag, and transmits said Ethernet frames to a receiver through the second level VS tunnel; wherein the first multiplexing module is adapted to store a two-level VS tunnel multiplexing relationship; and
when a traffic flow arrives at the ingress edge PBB node, the first multiplexing module in the ingress edge PBB node is adapted to match the two-level VS tunnel multiplexing relationship according to an ingress port for receiving the second level VS tunnel and a service VLAN tag, S-TAG, to obtain a corresponding first level VS tunnel tag backbone VLAN tag, B-TAG, and a service instance ID, I-SID; encapsulate a backbone destination address, B-DA, a backbone source address, B-SA, the B-TAG, and the I-SID into a provider Ethernet frame header; and send the provider Ethernet frame header from a corresponding egress port.

10. The Ethernet architecture system according to claim 9, wherein the ingress edge PBB node of the first level VS tunnel comprises a first multiplexing module adapted to multiplex the second level VS tunnel into the first level VS tunnel; and
the egress edge PBB node of the first level VS tunnel comprises a first demultiplexing module adapted to demultiplex the first level VS tunnel into the corresponding second level VS tunnel.

11. An Ethernet architecture system, wherein a second level virtual local area network VLAN, switching, VS, tunnel is established in provider bridged networks, PBN, and a first level MAC switching tunnel is established in a provider backbone bridged network PBBN;
the second level VS tunnel is derived from an edge provider bridge, PB, node for connecting a customer edge, CE, in a transmitter PBN and ended at an PB node for connecting a customer edge, CE, in the receiver PBN; the first level MAC switching tunnel is derived from an edge provider backbone bridge, PBB, of a provider backbone bridged network, PBBN, and ended at another edge PBB node;
an ingress edge PB node of the second level VS tunnel adapted to receive one or more Ethernet frames sent from a transmitter, map said Ethernet frames into the second level VS tunnel, and transmit said Ethernet frames to an ingress edge PBB node of the first level MAC switching tunnel;
the ingress edge PBB node of the first level MAC switching tunnel adapted to multiplex the second level VS tunnel into the first level MAC switching tunnel, and the second level VS tunnel is identified by a unique virtual channel, VC, tag;
an intermediate PBB node of the first level MAC switching tunnel adapted to switch said Ethernet frames of the first level MAC switching tunnel by adopting a MAC in MAC technology, and transparently transmit said Ethernet frame of the second level VS tunnel and the VC tag carried by the first level MAC switching tunnel; and
an egress edge node of the first level MAC switching tunnel adapted to demultiplex the first level MAC switching tunnel into a corresponding second level VS tunnel according to the VC tag, and transmit said Ethernet frames to a receiver through the second level VS tunnel;
wherein the ingress edge PBB node of the first level MAC switching tunnel comprises a second multiplexing module adapted to multiplex the second level VS tunnel into the first level MAC switching tunnel;
the egress edge PBB node of the first level MAC switching tunnel comprises a second demultiplexing module adapted to demultiplex the first level MAC switching tunnel into the corresponding second level VS tunnel; and
when a traffic flow arrives at the ingress edge PBB node, the second multiplexing module in the ingress edge PBB node is adapted to match the two-level tunnel multiplexing relationship according to an ingress port for receiving the second level VS tunnel and a service VLAN tag, S-TAG, to obtain corresponding first level MAC switching tunnel encapsulation information comprising a backbone MAC destination address, B-DA, a backbone source address, B-SA, a backbone VLAN tag, B-TA, and a service instance ID, I-SID; encapsulate the encapsulation information into a provider Ethernet frame header; and send the provider Ethernet frame header from a corresponding egress port.

## Patentansprüche

1. Verfahren zum Übertragen von Ethernet-Rahmen, umfassend:
Abbilden eines oder mehrerer von einem Sender gesandten Ethernet-Rahmen auf einen mit dem Sender korrespondierenden virtuellen lokalen Netzwerk- bzw. VLAN-Vermittlungs- bzw. VS-Tunnel der zweiten Ebene;
Multiplexen des VS-Tunnels der zweiten Ebene in einen VS-Tunnel der ersten Ebene durch einen Edge-Eingangsknoten des VS-Tunnels der ersten Ebene, der mit dem VS-Tunnel der zweiten Ebene verbunden ist, wobei der VS-Tunnel der zweiten Ebene durch eine eindeutige Markierung eines virtuellen Kanals bzw. VC identifiziert wird;
Vermitteln, durch einen zwischenliegenden Knoten des VS-Tunnels der ersten Ebene, der Ethernet-Rahmen des VS-Tunnels der ersten Ebene durch Anwenden einer VS-Technologie und transparentes Übertragen des Ethernet-Rahmens des VS-Tunnels der zweiten Ebene und der von dem VS-Tunnel der ersten Ebene geführten VC-Markierung; und
Demultiplexen, durch einen Edge-Ausgangsknoten des VS-Tunnels der ersten Ebene, des VS-Tunnels der ersten Ebene in den VS-Tunnel der zweiten Ebene gemäß der VC-Markierung und Übertragen der von dem Sender gesandten Ethernet-Rahmen an einen Empfänger unter Verwendung des VS-Tunnels der zweiten Ebene;
wobei der VS-Tunnel der zweiten Ebene von einem Edge-Providerbrücken- bzw. PB-Knoten zum Verbinden eines Kunden-Edge bzw. CE in einem Sender-PBN abstammt und an einem PB-Knoten zum Verbinden eines Kunden-Edge bzw. CE in dem Empfänger-PBN endet; wobei der VS-Tunnel der ersten Ebene von einer Edge-Provider-Backbone-Brücke bzw. PBB eines Provider-Backbone-überbrückten Netzwerks bzw. PBBN abstammt und an einem anderen Edge-PBB-Knoten endet,
wobei das Multiplexen des VS-Tunnels der zweiten Ebene in den VS-Tunnel der ersten Ebene durch den Edge-Eingangsknoten ferner Folgendes umfasst:
Herstellen einer VS-Tunnel-Multiplexing-Beziehung auf zwei Ebenen an einem Edge-PBB-Eingangsknoten des PBBN; und
wenn ein Verkehrsfluss an dem Edge-PBB-Eingangsknoten des PBBN eintrifft, Abgleichen, durch den Edge-PBB-Eingangsknoten, der VS-Tunnel-Multiplexing-Beziehung auf zwei Ebenen gemäß einem Eingangsport zum Empfangen des VS-Tunnels der zweiten Ebene und einer Dienst-VLAN-Markierung bzw. S-TAG, Erhalten der korrespondierenden Markierung des VS-Tunnels der ersten Ebene, einer Backbone-VLAN-Markierung bzw. B-TAG und einer Dienstinstanz-ID bzw. I-SID; Verkapseln einer Backbone-Zieladresse bzw. B-DA, einer Backbone-Ausgangsadresse bzw. B-SA, der B-TAG und der I-SID in einen Provider-Ethemet-Rahmen-Header; und Senden des Provider-Ethernet-Rahmen-Headers von einem korrespondierenden Ausgangsport.

2. Verfahren nach Anspruch 1, wobei ein VS-Tunnel der ersten Ebene imstande ist, mindestens einen VS-Tunnel der zweiten Ebene zu tragen; wobei der VS-Tunnel der zweiten Ebene und der VS-Tunnel der ersten Ebene jeweils in Provider-überbrückten Netzwerken bzw. PBN und dem durch IEEE 802.1ad und IEEE 802.1ah definierten PBBN eingerichtet werden; und der VS-Tunnel der ersten Ebene eine Dienstinstanz-ID bzw. I-SID in einer Dienstinstanz-Markierung bzw. I-TAG in der IEEE-802.1ah-Rahmenstruktur als die VC-Markierung verwendet.

3. Verfahren nach Anspruch 1, wobei ein zwischenliegender PB-Knoten des VS-Tunnels der zweiten Ebene VS-Markierung-Vermittlung auf einer Ebene gemäß einer Eingangsport-Identität bzw. ID des VS-Tunnels der zweiten Ebene und einer Dienst-VLAN-Markierung bzw. S-TAG in einer IEEE-802.1ad-Rahmenstruktur durchführt, um die Ethernet-Rahmen zu übertragen; und
der VS-Tunnel der ersten Ebene eine Backbone-VLAN-Markierung bzw. B-TAG in der IEEE-802.1ah-Rahmenstruktur als eine VS-Markierung zur Vermittlung verwendet, um die Ethernet-Rahmen zu übertragen.

4. Verfahren nach Anspruch 1, wobei die B-DA eine Backbone-MAC- bzw. B-MAC-Adresse eines Edge-PBB-Ausgangsknotens des VS-Tunnels der ersten Ebene ist; und die B-SA eine B-MAC-Adresse des Edge-PBB-Eingangsknotens des VS-Tunnels der ersten Ebene ist.

5. Verfahren nach Anspruch 4, wobei das Demultiplexen des VS-Tunnels der ersten Ebene in den VS-Tunnel der zweiten Ebene ferner Folgendes umfasst:
Herstellen einer VS-Tunnel-Demultiplexing-Beziehung auf zwei Ebenen an einem Edge-PBB-Ausgangsknoten des PBBN; und
wenn der Verkehrsfluss an dem Edge-PBB-Ausgangsknoten des PBBN eintrifft, Entfernen, durch den Edge-PBB-Ausgangsknoten, des Provider-Ethernet-Rahmen-Headers, der die B-DA, die B-SA, die B-TAG und die I-TAG enthält; Abgleichen der VS-Tunnel-Demultiplexing-Beziehung auf zwei Ebenen gemäß der I-SID in der I-TAG, um eine korrespondierende Markierung des VS-Tunnels der zweiten Ebene bzw. S-TAG und einen Ausgangsport zu erhalten; Verkapseln der S-TAG in einen Ethernet-Rahmen-Header und Senden des Ethernet-Rahmen-Headers von dem korrespondierenden Ausgangsport.

6. Verfahren nach Anspruch 1, wobei ein Adressraum der VC-Markierung basierend auf jedem VS-Tunnel der ersten Ebene unabhängig zugeteilt wird;
die VC-Markierung basierend auf jedem Edge-PBB-Knoten unabhängig zugeteilt wird; oder
die VC-Markierung basierend auf einer gesamten PBBN-Domäne gleichmäßig zugeteilt wird.

7. Verfahren zum Übertragen von Ethernet-Rahmen, umfassend:
Abbilden eines oder mehrerer von einem Sender gesandten Ethernet-Rahmen auf einen mit dem Sender korrespondierenden virtuellen lokalen Netzwerk- bzw. VLAN-Vermittlungs- bzw. VS-Tunnel der zweiten Ebene;
Multiplexen des VS-Tunnels der zweiten Ebene in einen MAC-Vermittlungstunnel der ersten Ebene durch einen Edge-Eingangsknoten des MAC-Vermittlungstunnels der ersten Ebene, der mit dem VS-Tunnel der zweiten Ebene verbunden ist, wobei der VS-Tunnel der zweiten Ebene durch eine eindeutige Markierung eines virtuellen Kanals bzw. VC identifiziert wird;
Vermitteln, durch einen zwischenliegenden Knoten des MAC-Vermittlungstunnels der ersten Ebene, der Ethernet-Rahmen des MAC-Vermittlungstunnels der ersten Ebene durch Anwenden einer MAC-in-MAC-Technologie und transparentes Übertragen des Ethernet-Rahmens des VS-Tunnels der zweiten Ebene und der von dem MAC-Vermittlungstunnel der ersten Ebene geführten VC-Markierung; und
Demultiplexen, durch einen Edge-Ausgangsknoten des MAC-Vermittlungstunnels der ersten Ebene, des MAC-Vermittlungstunnels der ersten Ebene in einen korrespondierenden VS-Tunnel der zweiten Ebene gemäß der VC-Markierung und Übertragen der von dem Sender gesandten Ethernet-Rahmen an einen Empfänger;
wobei der VS-Tunnel der zweiten Ebene von einem Edge-Providerbrücken- bzw. PB-Knoten zum Verbinden eines Kunden-Edge bzw. CE in einem Sender-PBN abstammt und an einem PB-Knoten zum Verbinden eines Kunden-Edge bzw. CE in dem Empfänger-PBN endet; wobei der MAC-Vermittlungstunnel der ersten Ebene von einer Edge-Provider-Backbone-Brücke bzw. PBB eines Provider-Backbone-überbrückten Netzwerks bzw. PBBN abstammt und an einem anderen Edge-PBB-Knoten endet,
wobei das Multiplexen des VS-Tunnels der zweiten Ebene in den MAC-Vermittlungstunnel der ersten Ebene ferner Folgendes umfasst:
Herstellen einer Tunnel-Multiplexing-Beziehung auf zwei Ebenen an einem Edge-PBB-Eingangsknoten des PBBN;
wenn ein Verkehrsfluss an dem Edge-PBB-Eingangsknoten des PBBN eintrifft, Abgleichen, durch den Edge-PBB-Eingangsknoten, der Tunnel-Multiplexing-Beziehung auf zwei Ebenen gemäß einem Eingangsport zum Empfangen des VS-Tunnels der zweiten Ebene und einer Dienst-VLAN-Markierung bzw. S-TAG, um korrespondierende Verkapselungs-Informationen des MAC-Vermittlungstunnels der ersten Ebene zu erhalten, die eine Backbone-Zieladresse bzw. B-DA, eine Backbone-Ausgangsadresse bzw. B-SA, eine Backbone-VLAN-Markierung bzw. B-TAG und eine Dienstinstanz-ID bzw. I-SID umfassen; und Verkapseln der Verkapselungs-Informationen in einen Provider-Ethernet-Rahmen-Header; und Senden des Provider-Ethernet-Rahmen-Headers von einem korrespondierenden Ausgangsport.

8. Verfahren nach Anspruch 7, wobei der VS-Tunnel der zweiten Ebene und der MAC-Vermittlungstunnel der ersten Ebene jeweils in Provider-überbrückten Netzwerken bzw. PBN und einem durch IEEE 802.1 ad und IEEE 802.1ah definierten Provider-Backbone-überbrückten Netzwerk bzw. PBBN eingerichtet werden; ein zwischenliegender PB-Knoten des VS-Tunnels der zweiten Ebene VS-Markierung-Vermittlung auf einer Ebene gemäß einer Eingangsport-Identität bzw. ID des VS-Tunnels der zweiten Ebene und einer Dienst-VLAN-Markierung bzw. S-TAG in einer IEEE-802.1ad-Rahmenstruktur durchführt, um die Ethernet-Rahmen zu übertragen; und ein zwischenliegender Knoten des MAC-Vermittlungstunnels der ersten Ebene die Ethernet-Rahmen gemäß einer Backbone-MAC-Zieladresse bzw. B-DA und einer Backbone-VLAN-Markierung bzw. B-TAG gemäß einer statisch konfigurierten MAC-Weiterleitungstabelle weiterleitet.

9. Ethernet-Architektursystem, wobei ein virtueller lokaler Netzwerk- bzw. VLAN-Vermittlungs- bzw. VS-Tunnel der zweiten Ebene in Provider-überbrückten Netzwerken bzw. PBN eingerichtet wird und ein VS-Tunnel der ersten Ebene in einem Provider-Backbone-überbrückten Netzwerk bzw. PBBN eingerichtet wird;
der VS-Tunnel der zweiten Ebene von einem Edge-Providerbrücken- bzw. PB-Knoten zum Verbinden eines Kunden-Edge bzw. CE in einem Sender-PBN abstammt und an einem PB-Knoten zum Verbinden eines Kunden-Edge bzw. CE in dem Empfänger-PBN endet; wobei der VS-Tunnel der ersten Ebene von einer Edge-Provider-Backbone-Brücke bzw. PBB eines Provider-Backbone-überbrückten Netzwerks bzw. PBBN abstammt und an einem anderen Edge-PBB-Knoten endet,
ein Edge-PB-Eingangsknoten des VS-Tunnels der zweiten Ebene angepasst ist zum Empfangen eines oder mehrerer von einem Sender gesandter Ethernet-Rahmen, Abbilden der Ethernet-Rahmen in den VS-Tunnel der zweiten Ebene und Übertragen der Ethernet-Rahmen an einen Edge-PBB-Eingangsknoten des VS-Tunnels der ersten Ebene;
der Edge-PBB-Eingangsknoten des VS-Tunnels der ersten Ebene angepasst ist zum Multiplexen des VS-Tunnels der zweiten Ebene in den VS-Tunnel der ersten Ebene und der VS-Tunnel der zweiten Ebene durch eine eindeutige Markierung eines virtuellen Kanals bzw. VC identifiziert wird;
ein zwischenliegender PBB-Knoten des VS-Tunnels der ersten Ebene angepasst ist zum Vermitteln der Ethernet-Rahmen des VS-Tunnels der ersten Ebene durch Anwenden einer VS-Technologie und transparenten Übertragen des Ethernet-Rahmens des VS-Tunnels der zweiten Ebene und der von dem VS-Tunnel der ersten Ebene geführten VC-Markierung; und
ein Edge-Ausgangsknoten des VS-Tunnels der ersten Ebene angepasst ist zum Demultiplexen des VS-Tunnels der ersten Ebene in einen korrespondierenden VS-Tunnel der zweiten Ebene gemäß der VC-Markierung und Übertragen der Ethernet-Rahmen an einen Empfänger durch den VS-Tunnel der zweiten Ebene; wobei das erste Multiplexing-Modul angepasst ist zum Speichern einer VS-Tunnel-Multiplexing-Beziehung auf zwei Ebenen; und
wenn ein Verkehrsfluss an dem Edge-PBB-Eingangsknoten eintrifft, das erste Multiplexing-Modul in dem Edge-PBB-Eingangsknoten angepasst ist zum Abgleichen der VS-Tunnel-Multiplexing-Beziehung auf zwei Ebenen gemäß einem Eingangsport zum Empfangen des VS-Tunnels der zweiten Ebene und einer Dienst-VLAN-Markierung bzw. S-TAG, um eine korrespondierende Markierung des VS-Tunnels der ersten Ebene, eine Backbone-VLAN-Markierung bzw. B-TAG und eine Dienstinstanz-ID bzw. I-SID zu erhalten; Verkapseln einer Backbone-Zieladresse bzw. B-DA, einer Backbone-Ausgangsadresse bzw. B-SA, der B-TAG und der I-SID in einen Provider-Ethernet-Rahmen-Header; und Senden des Provider-Ethernet-Rahmen-Headers von einem korrespondierenden Ausgangsport.

10. Ethernet-Architektursystem nach Anspruch 9, wobei der Edge-PBB-Eingangsknoten des VS-Tunnels der ersten Ebene ein erstes Multiplexing-Modul umfasst, das angepasst ist zum Multiplexen des VS-Tunnels der zweiten Ebene in den VS-Tunnel der ersten Ebene; und
der Edge-PBB-Ausgangsknoten des VS-Tunnels der ersten Ebene ein erstes Demultiplexing-Modul umfasst, das angepasst ist zum Demultiplexen des VS-Tunnels der ersten Ebene in den korrespondierenden VS-Tunnel der zweiten Ebene.

11. Ethernet-Architektursystem, wobei ein virtueller lokaler Netzwerk- bzw. VLAN-Vermittlungs- bzw. VS-Tunnel der zweiten Ebene in Provider-überbrückten Netzwerken bzw. PBN eingerichtet wird und ein MAC-Vermittlungstunnel der ersten Ebene in einem Provider-Backbone-überbrückten Netzwerk bzw. PBBN eingerichtet wird;
der VS-Tunnel der zweiten Ebene von einem Edge-Providerbrücken- bzw. PB-Knoten zum Verbinden eines Kunden-Edge bzw. CE in einem Sender-PBN abstammt und an einem PB-Knoten zum Verbinden eines Kunden-Edge bzw. CE in dem Empfänger-PBN endet; wobei der MAC-Vermittlungstunnel der ersten Ebene von einer Edge-Provider-Backbone-Brücke bzw. PBB eines Provider-Backbone-überbrückten Netzwerks bzw. PBBN abstammt und an einem anderen Edge-PBB-Knoten endet;
ein Edge-PB-Eingangsknoten des VS-Tunnels der zweiten Ebene angepasst ist zum Empfangen eines oder mehrerer von einem Sender gesandter Ethernet-Rahmen, Abbilden der Ethernet-Rahmen in den VS-Tunnel der zweiten Ebene und Übertragen der Ethernet-Rahmen an einen Edge-PBB-Eingangsknoten des MAC-Vermittlungstunnels der ersten Ebene;
der Edge-PBB-Eingangsknoten des MAC-Vermittlungstunnels der ersten Ebene angepasst ist zum Multiplexen des VS-Tunnels der zweiten Ebene in den MAC-Vermittlungstunnel der ersten Ebene und der VS-Tunnel der zweiten Ebene durch eine eindeutige Markierung eines virtuellen Kanals bzw. VC identifiziert wird;
ein zwischenliegender PBB-Knoten des MAC-Vermittlungstunnels der ersten Ebene angepasst ist zum Vermitteln der Ethernet-Rahmen des MAC-Vermittlungstunnels der ersten Ebene durch Anwenden einer MAC-in-MAC-Technologie und transparenten Übertragen des Ethernet-Rahmens des VS-Tunnels der zweiten Ebene und der von dem MAC-Vermittlungstunnel der ersten Ebene geführten VC-Markierung; und
ein Edge-Ausgangsknoten des MAC-Vermittlungstunnels der ersten Ebene angepasst ist zum Demultiplexen des MAC-Vermittlungstunnels der ersten Ebene in einen korrespondierenden VS-Tunnel der zweiten Ebene gemäß der VC-Markierung und Übertragen der Ethernet-Rahmen an einen Empfänger durch den VS-Tunnel der zweiten Ebene;
wobei der Edge-PBB-Eingangsknoten des MAC-Vermittlungstunnels der ersten Ebene ein zweites Multiplexing-Modul umfasst, das angepasst ist zum Multiplexen des VS-Tunnels der zweiten Ebene in den MAC-Vermittlungstunnel der ersten Ebene;
der Edge-PBB-Ausgangsknoten des MAC-Vermittlungstunnels der ersten Ebene ein zweites Demultiplexing-Modul umfasst, das angepasst ist zum Demultiplexen des MAC-Vermittlungstunnels der ersten Ebene in den korrespondierenden VS-Tunnel der zweiten Ebene; und
wenn ein Verkehrsfluss an dem Edge-PBB-Eingangsknoten eintrifft, das zweite Multiplexing-Modul in dem Edge-PBB-Eingangsknoten angepasst ist zum Abgleichen der Tunnel-Multiplexing-Beziehung auf zwei Ebenen gemäß einem Eingangsport zum Empfangen des VS-Tunnels der zweiten Ebene und einer Dienst-VLAN-Markierung bzw. S-TAG, um korrespondierende Verkapselungs-Informationen des MAC-Vermittlungstunnels der ersten Ebene zu erhalten, die eine Backbone-MAC-Zieladresse bzw. B-DA, eine Backbone-Ausgangsadresse bzw. B-SA, eine Backbone-VLAN-Markierung bzw. B-TAG und eine Dienstinstanz-ID bzw. I-SID umfassen; Verkapseln der Verkapselungs-Informationen in einen Provider-Ethernet-Rahmen-Header; und Senden des Provider-Ethernet-Rahmen-Headers von einem korrespondierenden Ausgangsport.

## Revendications

1. Procédé de transmission de trame Ethernet, comprenant les étapes suivantes :
mettre en correspondance une ou plusieurs trames Ethernet envoyées depuis un émetteur vers un tunnel de commutation, VS, de réseau local virtuel, VLAN, de second niveau, correspondant à l'émetteur ;
multiplexer le tunnel VS de second niveau en un tunnel VS de premier niveau, par un noeud de périphérie d'entrée du tunnel VS de premier niveau qui est connecté au tunnel VS de second niveau, le tunnel VS de second niveau étant identifié par une étiquette de canal virtuel, VC, unique ;
commuter, par un noeud intermédiaire du tunnel VS de premier niveau, lesdites trames Ethernet du tunnel VS de premier niveau en adoptant une technologie VS, et transmettre de manière transparente ladite trame Ethernet du tunnel VS de second niveau et l'étiquette VC acheminée par le tunnel VS de premier niveau ; et
démultiplexer, par un noeud de périphérie de sortie du tunnel VS de premier niveau, le tunnel VS de premier niveau en le tunnel VS de second niveau selon l'étiquette VC, et transmettre lesdites trames Ethernet envoyées depuis l'émetteur à un récepteur en utilisant le tunnel VS de second niveau ;
où le tunnel VS de second niveau est dérivé d'un noeud de pont de fournisseur, PB, de périphérie pour connecter une périphérie client, CE, dans un PBN émetteur et se termine à un noeud PB pour connecter une périphérie client, CE, dans le PBN récepteur ; le tunnel VS de premier niveau est dérivé d'un pont de dorsale de fournisseur de périphérie, PBB, d'un réseau ponté de dorsale de fournisseur, PBBN, et se termine à un autre noeud PBB de périphérie ;
où le multiplexage du tunnel VS de second niveau en tunnel VS de premier niveau par un noeud de périphérie d'entrée comprend en outre les étapes suivantes :
établir une relation de multiplexage de tunnel VS à deux niveaux au niveau d'un noeud PBB de périphérie d'entrée du PBBN ; et
lorsque qu'un flux de trafic arrive au niveau du noeud PBB de périphérie d'entrée du PBBN, mettre en correspondance, par le noeud PBB de périphérie d'entrée, la relation de multiplexage de tunnel VS à deux niveaux selon un port d'entrée pour recevoir le tunnel VS de second niveau et une étiquette VLAN de service, S-TAG, obtenir l'étiquette de tunnel VS de premier niveau correspondante, une étiquette VLAN de dorsale, B-TAG, et une ID d'instance de service, I-SID ; encapsuler une adresse de destination de dorsale, B-DA, une adresse source de dorsale, B-SA, la B-TAG, et la I-SID dans un en-tête de trame Ethernet de fournisseur ; et envoyer l'en-tête de trame Ethernet de fournisseur depuis un port de sortie correspondant.

2. Procédé selon la revendication 1, dans lequel un tunnel VS de premier niveau peut acheminer au moins un tunnel VS de second niveau ; le tunnel VS de second niveau et le tunnel VS de premier niveau sont respectivement établis dans des réseaux pontés de fournisseur, PBN, et le PBBN est défini par l'IEEE 802.1ad et l'IEEE 802.1ah ; et le tunnel VS de premier niveau utilise une ID d'instance de service, I-SID, dans une étiquette d'instance de service, I-TAG, dans la structure de trame IEEE 802.1ah comme étiquette VC.

3. Procédé selon la revendication 1, dans lequel un noeud intermédiaire PB du tunnel VS de second niveau procède à une commutation d'étiquette VS à une couche selon une identité de port d'entrée, ID, du tunnel VS de second niveau et de l'étiquette VLAN de service, S-TAG, dans une structure de trame IEEE 802.1ad pour transmettre lesdites trames Ethernet ; et
le tunnel VS de premier niveau utilise une étiquette VLAN de dorsale, B-TAG, dans la structure de trame IEEE 802.1ah comme étiquette VS de commutation pour transmettre lesdites trames Ethernet.

4. Procédé selon la revendication 1, dans lequel la B-DA est une MAC de dorsale, B-MAC, une adresse MAC de noeud de dorsale d'un noeud PBB de périphérie de sortie du premier tunnel VS de premier niveau ; et
la B-SA est une adresse B-MAC du noeud PBB de périphérie d'entrée du tunnel VS de premier niveau.

5. Procédé selon la revendication 4, dans lequel le démultiplexage du tunnel VS de premier niveau en tunnel VS de second niveau comprend en outre les étapes suivantes :
établir une relation de démultiplexage de tunnel VS à deux niveaux au niveau d'un noeud PBB de périphérie de sortie du PBBN ; et
lorsque que le flux de trafic arrive au niveau du noeud PBB de périphérie de sortie du PBBN, retirer, par le noeud PBB de périphérie de sortie, l'en-tête de trame Ethernet de fournisseur contenant la B-DA, la B-SA, la B-TAG et la 1-TAG; mettre en correspondance la relation de multiplexage de tunnel VS à deux niveaux selon l'I-SID dans l'I-TAG pour obtenir une étiquette de tunnel VS de second niveau correspondante S-TAG et un port de sortie ; encapsuler la S-TAG dans un en-tête de trame Ethernet et envoyer l'en-tête de trame Ethernet depuis le port de sortie correspondant.

6. Procédé selon la revendication 1, dans lequel un espace d'adresse de l'étiquette VC est alloué sur la base de chaque tunnel VS de premier niveau indépendamment ;
l'étiquette VC est allouée sur la base de chaque noeud PBB de périphérie indépendamment ; ou
l'étiquette VC est allouée sur la base d'un domaine PBBN entier de manière uniforme.

7. Procédé de transmission de trame Ethernet comprenant les étapes suivantes :
mettre en correspondance une ou plusieurs trames Ethernet envoyées depuis un émetteur vers un tunnel de commutation, VS, de réseau local virtuel, VLAN, de second niveau, correspondant à l'émetteur ;
multiplexer le tunnel VS de second niveau en un tunnel de commutation MAC de premier niveau par l'intermédiaire d'un noeud de périphérie d'entrée du tunnel de commutation MAC de premier niveau connecté au tunnel VS de second niveau, le tunnel VS de second niveau étant identifié par une étiquette de canal virtuel, VC, unique ;
commuter, par un noeud intermédiaire du tunnel de commutation MAC de premier niveau, lesdites trames Ethernet du tunnel de commutation MAC de premier niveau en adoptant une technologie MAC-in-MAC, et transmettre de manière transparente ladite trame Ethernet du tunnel VS de second niveau et l'étiquette VC acheminée par le tunnel de commutation MAC de premier niveau ; et
démultiplexer, par un noeud de périphérie de sortie du tunnel de commutation MAC de premier niveau, le tunnel de commutation MAC de premier niveau en un tunnel VS de second niveau correspondant selon l'étiquette VC, et transmettre lesdites trames Ethernet envoyées depuis l'émetteur à un récepteur ;
où le tunnel VS de second niveau est dérivé d'un noeud de pont de fournisseur, PB, de périphérie pour connecter une périphérie client, CE, dans un PBN émetteur et se termine à un noeud PB pour connecter une périphérie client, CE, dans le récepteur PBN ; le tunnel de commutation MAC de premier niveau est dérivé d'un pont de dorsale de fournisseur de périphérie, PBB, d'un réseau ponté de dorsale de fournisseur, PBBN, et se termine à un autre noeud PBB de périphérie ;
où le multiplexage du tunnel VS de second niveau en tunnel de commutation MAC de premier niveau comprend en outre les étapes suivantes :
établir une relation de multiplexage de tunnel VS à deux niveaux au niveau d'un noeud de périphérie d'entrée PBB du PBBN ;
lors qu'un flux de trafic arrive au niveau du noeud PBB de périphérie d'entrée du PBBN, mettre en correspondance, par le noeud PBB de périphérie d'entrée, la relation de multiplexage de tunnel VS à deux niveaux selon un port d'entrée pour recevoir le tunnel VS de second niveau et une étiquette VLAN de service, S-TAG, pour obtenir des informations d'encapsulation de tunnel de commutation MAC de premier niveau correspondantes comprenant une adresse de destination de dorsale, B-DA, une adresse source de dorsale, B-SA, une étiquette VLAN de dorsale, B-TAG, et une ID d'instance de service, I-SID ; et encapsuler les informations d'encapsulation dans un en-tête de trame Ethernet de fournisseur ; et envoyer l'en-tête de trame Ethernet de fournisseur depuis un port de sortie correspondant.

8. Procédé selon la revendication 7, dans lequel le tunnel VS de second niveau et le tunnel de commutation MAC de premier niveau sont respectivement établis dans des réseaux pontés de fournisseur, PBN, et un réseau ponté de dorsale de fournisseur, PBBN, défini par l'IEEE 802.1ad et l'IEEE 802.1ah ; un noeud PB intermédiaire du tunnel VS de second niveau effectue une commutation d'étiquette VS à une couche selon une identité de port d'entrée, ID, du tunnel VS de second niveau et une étiquette VLAN de service, S-TAG, dans une structure de trame IEEE 802.1ad pour transmettre lesdites trames Ethernet ; et un noeud intermédiaire du tunnel de commutation MAC de premier niveau fait suivre lesdites trames Ethernet selon une adresse de destination MAC de dorsale, B-DA, et une étiquette VLAN de dorsale, B-TAG, suivant une table de renvoi MAC configurée de manière statique.

9. Système d'architecture Ethernet, dans lequel un tunnel de commutation, VS, de réseau local virtuel de second niveau, VLAN, est établi dans des réseaux pontés de fournisseurs, PBN, et un tunnel VS de premier niveau est établi dans un réseau ponté de dorsale de fournisseur, PBBN ;
le tunnel VS de second niveau est dérivé d'un noeud de pont de fournisseur de périphérie, PB, pour connecter une périphérie client, CE, dans un PBN émetteur et se termine à un noeud PB pour connecter une périphérie client, CE, dans le récepteur PBN ; le tunnel VS de premier niveau est dérivé d'un pont de dorsale de fournisseur de périphérie, PBB, d'un réseau ponté de dorsale de fournisseur, PBBN, et se termine à un autre noeud PBB de périphérie ;
un noeud PB de périphérie d'entrée du tunnel VS de second niveau est conçu pour recevoir une ou plusieurs trames Ethernet envoyées d'un émetteur, pour mettre en correspondance lesdites trames Ethernet dans le tunnel VS de second niveau et pour transmettre lesdites trames Ethernet à un noeud PBB de périphérie d'entrée du tunnel VS de premier niveau ;
le noeud PBB de périphérie d'entrée du tunnel VS de premier niveau est conçu pour multiplexer le tunnel VS de second niveau en tunnel VS de premier niveau, et le tunnel VS de second niveau est identifié par une étiquette de canal virtuel, VC, unique ;
un noeud intermédiaire PBB du tunnel VS de premier niveau est conçu pour commuter lesdites trames Ethernet d'un tunnel VS de premier niveau en adoptant une technologie VS, et pour transmettre de manière transparente ladite trame Ethernet du tunnel VS de second niveau et l'étiquette VC acheminée par le tunnel VS de premier niveau ; et
un noeud de périphérie de sortie du tunnel VS de premier niveau est conçu pour démultiplexer le tunnel VS de premier niveau en un tunnel VS de second niveau correspondant selon l'étiquette VC, et pour transmettre lesdites trames Ethernet à un récepteur à travers le tunnel VS de second niveau ; où le premier module de multiplexage est conçu pour stocker une relation de multiplexage de tunnel VS à deux niveaux ; et
lorsque qu'un flux de trafic arrive au niveau du noeud PBB de périphérie d'entrée, le premier module de multiplexage dans le noeud PBB de périphérie d'entrée est conçu pour faire correspondre la relation de multiplexage de tunnel VS à deux niveaux selon un port d'entrée pour recevoir le tunnel VS de second niveau et une étiquette VLAN de service, S-TAG, pour obtenir une étiquette de tunnel VS de premier niveau correspondante, une étiquette VLAN de dorsale, B-TAG, et une ID d'instance de service, I-SID ; pour encapsuler une adresse de destination de dorsale, B-DA, une adresse source de dorsale, B-SA, la B-TAG, et la I-SID dans un en-tête de trame Ethernet de fournisseur ; et envoyer l'en-tête de trame Ethernet de fournisseur depuis un port de sortie correspondant.

10. Système d'architecture Ethernet, selon la revendication 9, dans lequel le noeud PBB de périphérie d'entrée du tunnel VS de premier niveau comprend un premier module de multiplexage conçu pour multiplexer le tunnel VS de second niveau en tunnel VS de premier niveau ; et
le noeud PBB de périphérie de sortie du tunnel VS de premier niveau comprend un premier module de démultiplexage conçu pour démultiplexer le tunnel VS de premier niveau en tunnel VS de second niveau correspondant.

11. Système d'architecture Ethernet, dans lequel un tunnel de commutation, VS, de réseau local virtuel de second niveau, VLAN, est établi dans des réseaux pontés de fournisseurs, PBN, et un tunnel de commutation MAC de premier niveau est établi dans un réseau ponté de dorsale de fournisseur, PBBN ;
le tunnel VS de second niveau est dérivé d'un noeud de pont de fournisseur de périphérie, PB, pour connecter une périphérie client, CE, dans un PBN émetteur et se termine à un noeud PB pour connecter une périphérie client, CE, dans le récepteur PBN ; le tunnel de commutation MAC de premier niveau est dérivé d'un pont de dorsale de fournisseur de périphérie, PBB, d'un réseau ponté de dorsale de fournisseur, PBBN, et se termine à un autre noeud PBB de périphérie ;
un noeud PB de périphérie d'entrée du tunnel VS de second niveau est conçu pour recevoir une ou plusieurs trames Ethernet envoyées d'un émetteur, pour mettre en correspondance lesdites trames Ethernet dans le tunnel VS de second niveau et pour transmettre lesdites trames Ethernet à un noeud PBB de périphérie d'entrée du tunnel de commutation MAC de premier niveau ;
le noeud PBB de périphérie d'entrée du tunnel de commutation MAC de premier niveau est conçu pour multiplexer le tunnel VS de second niveau en tunnel de commutation MAC de premier niveau, et le tunnel VS de second niveau est identifié par une étiquette de canal virtuel, VC, unique ;
un noeud intermédiaire PBB du tunnel de commutation MAC de premier niveau est conçu pour commuter lesdites trames Ethernet du tunnel de commutation MAC de premier niveau en adoptant une technologie MAC-in-MAC, et pour transmettre de manière transparente ladite trame Ethernet du tunnel VS de second niveau et l'étiquette VC acheminée par le tunnel de commutation MAC de premier niveau ; et un noeud de périphérie de sortie du tunnel de commutation MAC de premier niveau est conçu pour démultiplexer le tunnel de commutation MAC de premier niveau en un tunnel VS de second niveau correspondant selon l'étiquette VC, et pour transmettre lesdites trames Ethernet à un récepteur à travers le tunnel VS de second niveau ;
où le noeud PBB de périphérie d'entrée du tunnel de commutation MAC de premier niveau comprend un second module de multiplexage conçu pour multiplexer le tunnel VS de second niveau en le tunnel de commutation MAC de premier niveau ; le noeud PBB de périphérie de sortie du tunnel de commutation MAC de premier niveau comprend un second module de démultiplexage conçu pour démultiplexer le tunnel de commutation MAC de premier niveau en tunnel VS de second niveau correspondant ; et
lorsque qu'un flux de trafic arrive au niveau du noeud PBB de périphérie d'entrée, le second module de multiplexage dans le noeud PBB de périphérie d'entrée est conçu pour faire correspondre la relation de multiplexage de tunnel VS à deux niveaux selon un port d'entrée pour recevoir le tunnel VS de second niveau et une étiquette VLAN de service, S-TAG, pour obtenir des informations d'encapsulation de tunnel de commutation MAC de premier niveau correspondantes comprenant une adresse de destination MAC de dorsale, B-DA, une adresse source de dorsale, B-SA, une étiquette VLAN de dorsale, B-TAG, et une ID d'instance de service, I-SID ; encapsuler les informations d'encapsulation dans un en-tête de trame Ethernet de fournisseur ; et envoyer l'en-tête de trame Ethernet de fournisseur depuis un port de sortie correspondant.
